# EUROPEAN PATENT APPLICATION

(11) **EP 1 914 944 A2**
(43) Date of publication of application: **23.04.2008**
(21) Application number: 07020323.7
(22) Date of filing: 17.10.2007
(51) Int. Cl.: H04L 12/56

(54) **ATM cell data transmission control**

(30) Priority: 18.10.2006 JP 2006283818
(71) Applicant: NEC Corporation, Minato-ku Tokyo (JP)
(72) Inventor: Kakuno, Osamu, Kodama-gun Saitama 367-0297 (JP)
(74) Representative: Glawe, Delfs, Moll

(57) **Abstract**

An ATM cell data transmission control process is disclosed for controlling the transmission of ATM cell data. To an ATM layer device for processing ATM cell data in an ATM layer, there are connected a preceding-stage device for transmitting ATM cell data to the ATM layer device through a UTOPIA level 2 interface, and subsequent-stage devices for receiving the ATM cell data transmitted from the ATM layer device through a UTOPIA level 2 interface. The ATM layer device searches for a second address of the preceding-stage device based on a first address of a subsequent-stage device which is incapable of receiving ATM cell data, and masks the second address so as not to be recognized by the preceding-stage device when the ATM layer device transmits the second address to the preceding-stage device.

## Description

This application is based upon and claims the benefit of priority from Japanese Patent Application No. 2006-283818 filed on October 18, 2006, the content of which is incorporated by reference.

### BACKGROUND OF THE INVENTION

### 1. Field of the Invention:

The present invention relates to an ATM cell communication system, an ATM layer device, and an ATM cell communication method for controlling the transmission of ATM cell data in an asynchronous transfer mode, and more particularly to an ATM cell communication system, an ATM layer device, and an ATM cell communication method for controlling the transmission of ATM cell data using UTOPIA level 2.

### 2. Description of the Related Art:

Generally, ATM cell communication systems for multiplexing and demultiplexing ATM (Asynchronous Transfer Mode) cell data incorporate UTOPIA (Universal Test & Operations PHY Interface for ATM) interfaces proposed by the ATM forum. A UTOPIA interface is used as an interface between an ATM layer device for operating in an ATM layer and a PHY (Physical Layer Protocol) layer device for operating in a physical layer.

At present, three levels are defined for UTOPIA interfaces. One of the three levels is UTOPIA level 2 that is an interface to which a single ATM layer device and a plurality of PHY layer devices are connected. According to the UTOPIA level 2, up to 31 PHY layer devices can be connected to one ATM layer device.

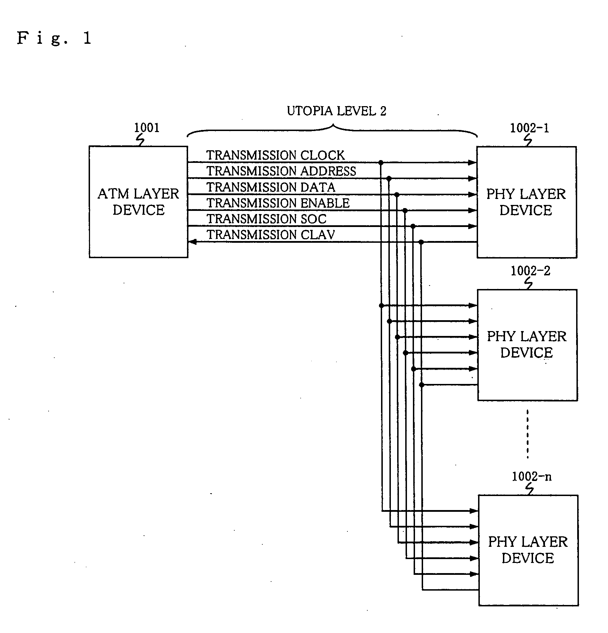

As shown in Fig. 1 of the accompanying drawings, ATM layer device 1001 and a plurality of PHY layer devices 1002-1 through 1002-n (n is an integer ranging from 2 to 31) are connected to each other. ATM layer device 1001 and PHY layer devices 1002-1 through 1002-n have a UTOPIA level 2 interface in common.

A transmission clock signal, a transmission address signal, a transmission data signal, a transmission enable signal, a transmission SOC signal, and a transmission CLAV signal are used as signals for transmitting ATM cell data from ATM layer device 1001 to PHY layer devices 1002-1 through 1002-n The transmission address signal is a 5-bit address bus signal assigned to each of PHY layer devices 1002-1 through 1002-n to specify PHY layer devices 1002-1 through 1002-n to which ATM cell data are to be transmitted from ATM layer device 1001. The transmission data signal is a 8-bit ATM cell data bus signal transmitted from ATM layer device 1001 to PHY layer devices 1002-1 through 1002-n. The transmission enable signal is a signal indicative of whether the ATM cell data transmitted from ATM layer device 1001 to PHY layer devices 1002-1 through 1002-n are valid or not. The transmission SOC signal is a signal indicative of the start of the ATM cell data transmitted from ATM layer device 1001 to PHY layer devices 1002-1 through 1002-n. The transmission CLAV signal is a receivable state signal indicative of whether the ATM cell data transmitted from ATM layer device 1001 can be received by PHY layer devices 1002-1 through 1002-n or not. The transmission CLAV signal is transmitted from PHY layer devices 1002-1 through 1002-n to ATM layer device 1001. The transmission clock signal is a clock signal for synchronizing the above signals. In Fig. 1, only signals for transmitting ATM cell data from ATM layer device 1001 to PHY layer devices 1002-1 through 1002-n are illustrated.

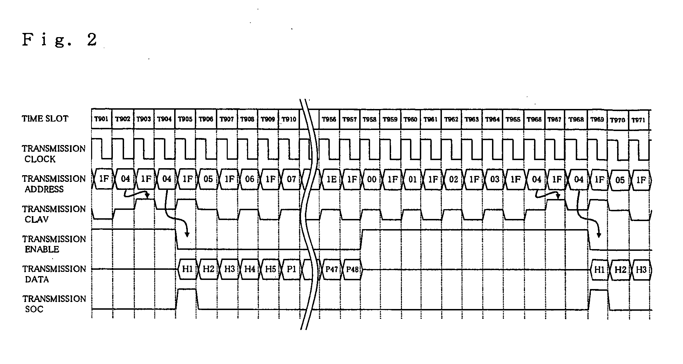

The timing of ATM cell data transmission in the system shown in Fig. 1 will be described below with reference to Fig. 2 of the accompanying drawings. It is assumed that transmission address "04" is assigned to PHY layer device 1002-5. The ATM cell data from ATM layer device 1001 can be received by PHY layer device 1002-5. In Fig. 2, time slot numbers are assigned to respective timing slots for the purpose of illustrating the transmission timing for respective signals.

Transmission address signal "04" that is generated by ATM layer device 1001 is transmitted from ATM layer device 1001 to PHY layer devices 1002-1 through 1002-n in time slot T902. Of PHY layer devices 1002-1 through 1002-n which have received transmission address signal "04", PHY layer device 1002-5 to which transmission address "04" has been assigned recognizes that transmission address signal "04" represents its own address. The transmission address signal is generated by ATM layer device 1001 using a 5-bit cyclic counter, which produces an output value of "0" after an output value of "1 E", with no output value of "1 F" being used.

In time slot T903, PHY layer device 1002-5 sets the transmission CLAV signal to "1" to indicate that it can presently receive ATM cell data, and transmits the transmission CLAV signal to ATM layer device 1001.

When the transmission CLAV signal transmitted from PHY layer device 1002-5 is received by ATM layer device 1001, ATM layer device 1001 recognizes that the transmission CLAV signal received thereby has a value of "1".

In time slot T904, ATM layer device 1001 transmits transmission address signal "04" again. Thereafter, in time slots T905 through T957, ATM layer device 1001 reads ATM cell data destined for PHY layer device 1002-5 from its own storage, and transmits the ATM cell data as transmission data to PHY layer device 1002-5. At this time, ATM layer device 1001 also transmits a transmission SOC signal which is "1" at the first clock pulse of the transmission data and a transmission enable signal which is "0" at 53 clock pulses of the transmission data. Since the transmission data are ATM cell data, the header comprises five bytes H1 through H5 of the transmission data, and the payload comprises 48 bytes P1 through P48 of the transmission data. The transmission enable signal is a negative signal, and the transmission SOC signal is a positive signal. When ATM layer device 1001 transmits transmission address signal "04" again, the counter for generating the transmission address signal is inactivated.

ATM layer device 1001 counts up transmission addresses from time to time and sends them to PHY layer devices 1002-1 through 1002-n for periodically polling the receivable states of PHY layer devices 1002-1 through 1002-n. ATM layer device 1001 sends address "1F" between adjacent addresses. When undefined address "1F" is transmitted, a wait time is added, and handshake is performed in the wait time between the transmission and reception of signals for thereby realizing high-speed data transfer in UTOPIA level 2.

The transmission addresses are cyclically generated until transmission address signal "04" is transmitted again in time slot T966. When a valid transmission CLAV signal from PHY layer device 1002-5 is received in time slot T967, the transmission process in time slots T902 through T957 described above is carried out again.

The timing of ATM cell data transmission between ATM layer device 1001 and PHY layer devices 1002-1 through 1002-n which are connected to each other by UTOPIA level 2 has been described above.

There may be an instance wherein a plurality of transmission addresses are assigned to a PHY layer device. For example, it is assumed that transmission addresses "0" through "4" are assigned to PHY layer device 1002-1 shown in Fig. 1. If a buffer shared by the transmission addresses is managed by PHY layer device 1002-1, then there may be a possible difference between the number of free areas of the buffer and the number of transmission addresses that are indicated as being capable of ATM cell data in the transmission CLAV signal.

A technique of masking a transmission CLAV signal for a predetermined period is disclosed in JP-2004-015759A.

General ATM communication devices incorporate an AAL (ATM Adaptation Layer) processor installed therein. AAL Type 2 cells need to have a plurality of short cell data multiplexed in combination with ATM cell data to produce composite data for effective band utilization and also to perform quality class control (cell delay and scrap rate control) per CID (Cell ID) and per VC (for Type 5 cells).

Furthermore, a UTOPIA level 2 interface may be used as an interface between a device connected as a preceding stage of ATM layer device 1001 shown in Fig. 1 and ATM layer device 1001.

In this case, there is no correlation between handshake control of the UTOPIA level 2 interface (hereinafter referred to as "first interface") between the device (hereinafter referred to as "ATM cell data transmission device") connected as the preceding stage of ATM layer device 1001 and ATM layer device 1001 and handshake control of the UTOPIA level 2 interface (hereinafter referred to as "second interface") between ATM layer device 1001 and PHY layer devices 1002-1 through 1002-n.

For example, even when FIFO memories in PHY layer devices 1002-1 through 1002-n are full, if a reception FIFO memory provided in a region of ATM layer device 1001 that is connected to the first interface has a free area, then the transmission of ATM cell data from the ATM cell data transmission device is not limited. Consequently, the size of a common cell buffer in ATM layer device 1001 has to be as large as a storage capacity that is determined from the input cell burst length and the output PHY layer device bit rate. Moreover, if the transmission of ATM cell data from the ATM cell data transmission device is intensified to higher traffic, then the common cell buffer overflows, tending to a data loss.

The UTOPIA bus transmits and receives ATM cell data regardless of the generation of composite data and the quality class quality described above. Therefore, if the traffic from the ATM cell data transmission device is intensified, then a data loss may possibly be caused due to an overflow of the common cell buffer that is required for the above control.

### SUMMARY OF THE INVENTION

It is an object of the present invention to provide an ATM cell communication system, an ATM layer device, and an ATM cell communication method which are capable of preventing a loss of cell data due to a cell buffer overflow by employing a minimum cell buffer.

To accomplish the above object, there is provided in accordance with the present invention an ATM cell communication system comprising an ATM layer device for transmitting and receiving ATM cell data and processing ATM cell data in an ATM layer, a preceding-stage device connected to a preceding stage of the ATM layer device by a UTOPIA level 2 interface, and a plurality of subsequent-stage devices connected to a subsequent stage of the ATM layer device by a UTOPIA level 2 interface, wherein the ATM layer device searches for a second address of the preceding-stage device based on a first address of a subsequent-stage device which is incapable of receiving ATM cell data, and masks the second address when the second address is transmitted to the preceding-stage device.

According to the present invention, the ATM layer device searches for the second address of the preceding-stage device based on the first address of the subsequent-stage device which is incapable of receiving ATM cell data. The ATM layer device masks the second address when the second address which has been searched for is transmitted from the ATM layer device to the preceding-stage device.

Consequently, a data loss due to an overflow of a common cell buffer provided in the ATM layer device is prevented from occurring. The transmission of ATM cell data destined for subsequent-stage devices having addresses other than the masked address is not controlled.

The above and other objects, features, and advantages of the present invention will become apparent from the following description with reference to the accompanying drawings which illustrate an example of the present invention.

### BRIEF DESCRIPTION OF THE DRAWINGS

Fig. 1 is block diagram showing general connections between an ATM layer device and PHY layer devices that are connected to each other by UTOPIA level 2;
Fig. 2 is a timing chart showing the timing of ATM cell data transmission in the system shown in Fig. 1;
Fig. 3 is a block diagram of an ATM cell communication system according to the present invention;
Fig. 4 is a block diagram showing UTOPIA buses between an ATM switch and an ATM layer device and between the ATM layer device and PHY layer devices shown in Fig. 3;
Fig. 5 is a detailed block diagram of the ATM layer device shown in Figs. 3 and 4;
Fig. 6 is a table showing, by way of example, an address table shown in Fig. 5;
Fig. 7 is a block diagram of an AAL processor shown in Fig. 5;
Fig. 8 is a block diagram of a reception address generator shown in Fig. 5;
Fig. 9 is a table showing, by way of example, an address mask register shown in Fig. 8;
Fig. 10 is a block diagram of a mask signal generator shown in Fig. 8;
Fig. 11 is a timing chart showing the timing for generating an ADDRMSK signal in the mask signal generator shown in Fig. 10;
Fig. 12 is a timing chart illustrative of a masking process for masking a reception address according to the present invention; and
Fig. 13 is a timing chart illustrative of a masking process for masking a reception CLAV signal according to the present invention.

### DETAILED DESCRIPTION OF THE PREFERRED EMBODIMENTS

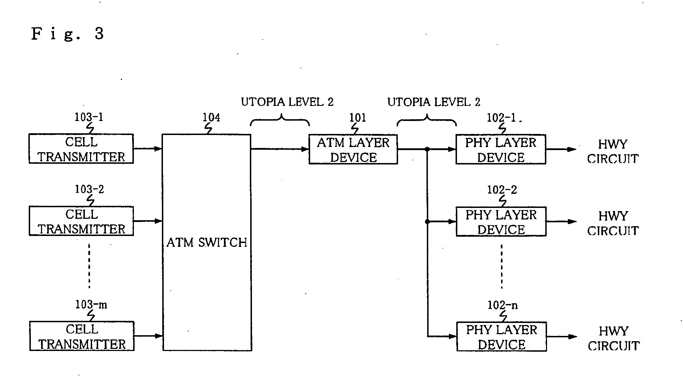

As shown in Fig. 3, an ATM cell communication system according to the present invention comprises ATM layer device 101, a plurality of PHY layer devices 102-1 through 102-n (n is an integer ranging from 2 to 31), a plurality of cell transmitters 103-1 through 103-m (m is an integer of 2 or greater), and ATM switch 104. ATM layer device 101 and PHY layer devices 102-1 through 102-n are connected to each other by a UTOPIA level 2 interface. ATM switch 104 and ATM layer device 101 are connected to each other by a UTOPIA level, 2 interface.

Cell transmitters 103-1 through 103-m transmit ATM cell data to be transmitted to an HWY (highway) circuit.

ATM switch 104 switches the ATM cell data transmitted from cell transmitters 103-1 through 103-m based on the header information of the ATM cell data, and transmits the ATM cell data destined for PHY layer devices 102-1 through 102-n to ATM layer device 101. Cell transmitters 103-1 through 103-m and ATM switch 104 serve as preceding-stage devices.

ATM layer device 101 performs an AAL process in ATM layers, such as composite data generation and quality class control, on the ATM cell data transmitted from ATM switch 104. ATM layer device 101 then transmits the ATM cell data thus processed to PHY layer devices 102-1 through 102-n.

PHY layer devices 102-1 through 102-n serve as subsequent-stage devices for transmitting the ATM cell data transmitted from ATM layer device 101 to the HWY circuit.

In the illustrated system, only the direction to transmit ATM cell data to the HWY circuit is shown, and the direction to receive ATM cell data from the HWY circuit is not shown. This holds true for arrangements to be described later.

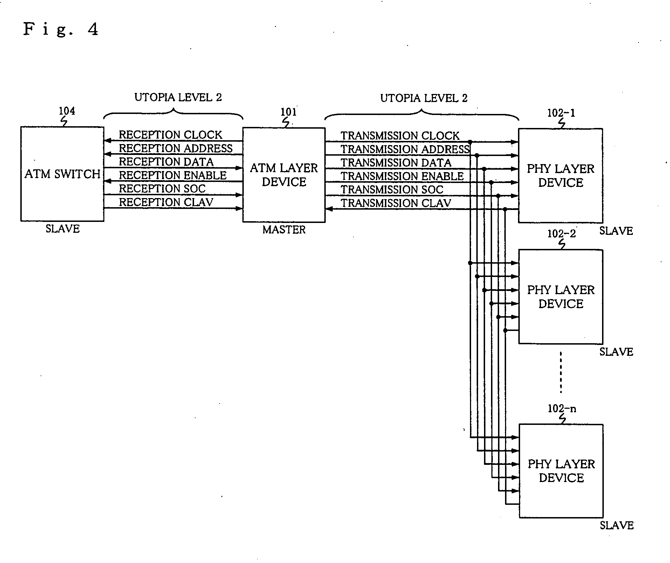

As shown in Fig. 4, the UTOPIA bus between ATM switch 104 and ATM layer device 101 employs a UTOPIA level 2 interface with ATM layer device 101 serving as a master and ATM switch 104 as a slave. The UTOPIA bus between ATM layer device 101 and PHY layer devices 102-1 through 102-n also employs a UTOPIA level 2 interface with ATM layer device 101 serving as a master and PHY layer devices 102-1 through 102-n as a slave.

A reception clock signal, a reception address signal, and a reception enable signal which is a signal indicative of whether ATM cell data can be received or not, are transmitted from ATM layer device 101 to ATM switch 104. A reception data signal, a reception SOC signal which is a signal indicative of the start of reception data, and a reception CLAV signal which is a transmission request signal indicative of whether there are ATM cell data to be transmitted or not, are transmitted from ATM switch 104 to ATM layer device 101.

A transmission clock signal, a transmission address signal, a transmission data signal, d a transmission enable signal indicative of whether transmission data are valid or not, and a transmission SOC signal which is a signal indicative of the start of transmission data, are transmitted from ATM layer device 101 to PHY layer devices 102-1 through 102-n. A transmission CLAV signal
which is a receivable state indication signal indicative of whether ATM cell data can be received by PHY layer devices 102-1 through 102-n or not, is transmitted from PHY layer devices 102-1 through 102-n to ATM layer device 101.

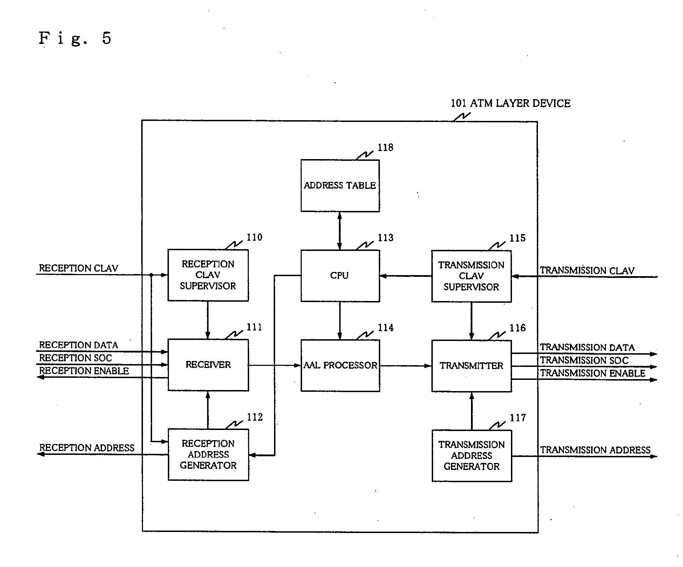

As shown in Fig. 5, ATM layer device 101 comprises reception CLAV supervisor 110, receiver 111, reception address generator 112, AAL processor 114, transmission CLAV supervisor 115, transmitter 116, transmission address generator 117, address table 118, and CPU 113 for controlling these components.

Reception CLAV supervisor 110 supervises a reception CLAV signal transmitted from ATM switch 104 and judges whether there is a transmission request for ATM cell data or not.

Receiver 111 transmits a reception enable signal which is a signal indicative of whether ATM cell data can be received or not, and receives reception data transmitted from ATM switch 104 together with a reception SOC signal.

Reception address generator 112 generates a reception address signal for the reception data received by receiver 111 and transmits the generated reception address signal to ATM switch 104. The reception address signal is a 5-bit address signal.

AAL processor 114 performs an AAL process, such as composite data generation and quality class control, on ATM cell data received by receiver 111. The AAL process is performed based on information that is stored in address table 118, to be described below.

Transmission CLAV supervisor 115 supervises a transmission CLAV signal transmitted from PHY layer devices 102-1 through 102-n and judges whether PHY layer devices 102-1 through 102-n can receive ATM cell data or not.

Transmitter 116 transmits the ATM cell data processed by AAL processor 114 to PHY layer devices 102-1 through 102-n.

Transmission address generator 117 generates a transmission address signal for the transmission data transmitted from transmitter 116, and transmits the generated transmission address signal to PHY layer devices 102-1 through 102-n. The transmission address signal is a 5-bit address signal.

Address table 118 stores reception addresses to be transmitted to ATM switch 104 and transmission addresses to be transmitted to PHY layer devices 102-1 through 102-n, in association with each other. Address table 118 is stored in a memory, not shown, accessible by CPU 113.

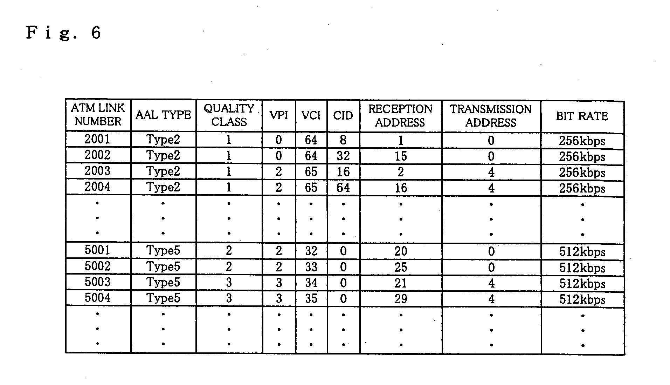

Fig. 6 shows in detail address table 118 in which the reception addresses to be transmitted to ATM switch 104 and the transmission addresses to be transmitted to PHY layer devices 102-1 through 102-n are associated with each other. Address table 118 also stores ATM link numbers, AAL types, quality classes, VPls, VCls, CIDs, and bit rates in association with each other. The information stored in address table 118 is set by CPU 113.

By referring to address table 118, the second addresses (the reception addresses shown in Fig. 6) of cell transmitters 103-1 through 103-m via ATM switch 104 as a transmission source for transmitting ATM cell data to PHY layer devices 102-1 through 102-n are searched for based on the first addresses (the transmission addresses shown in Fig. 6) of PHY layer devices 102-1 through 102-n.

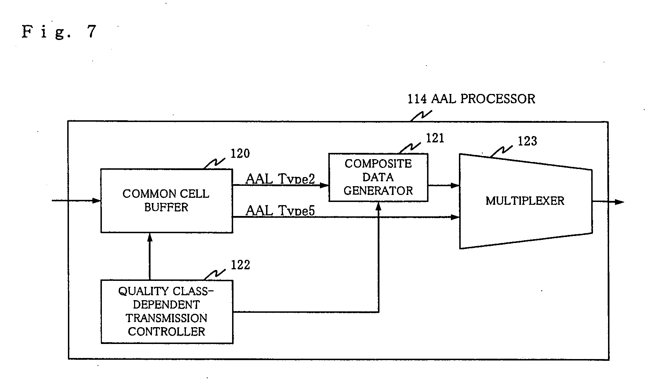

Fig. 7 shows in detail AAL processor 114. As shown in Fig. 7, AAL processor 114 comprises common cell buffer 120, a composite data generator 121, quality class-dependent transmission controller 122, and multiplexer 123.

Common cell buffer 120 temporarily stores ATM cell data of various quality classes received by ATM layer device 101.

Composite data generator 121 multiplexes a plurality of short cells of AAL Type 2 from the ATM cell data temporarily stored in common cell buffer 120. At this time, composite data generator 121 refers to address table 118, reads only ATM cell data of AAL Type 2 from common cell buffer 120, and processes the read ATM cell data.

Quality class-dependent transmission controller 132 performs transmission sequence control and scrap control on the ATM cell data temporarily stored in common cell buffer 120 depending on their quality classes. These control details will not be described below as the control processes are carried out by referring to address table 118 in the same manner as control processes of the related art.

Multiplexer 123 multiplexes ATM cell data of AAL Type 5 temporarily stored in common cell buffer 120 and the ATM cell data of AAL Type 2 multiplexed by composite data generator 121, based on the control processes performed by quality class-dependent transmission controller 132.

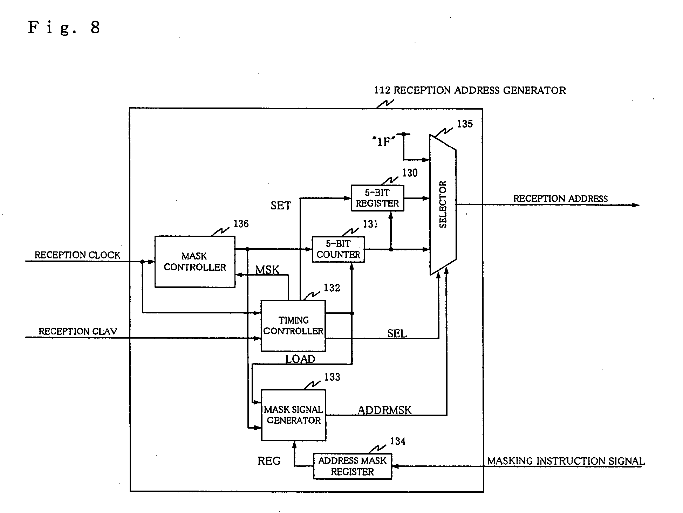

As shown in Fig. 8, reception address generator 112 comprises 5-bit register 130, 5-bit counter 131, timing controller 132, mask signal generator 133, address mask register 134, selector 135, and mask controller 136.

5-bit counter 131 is a 5-bit cyclic counter for generating reception addresses.

5-bit register 130 serves to hold the count value of 5-bit counter 131.

Mask signal generator 133 serves to generate a signal for masking reception addresses transmitted from reception address generator 112 to ATM switch 104.

Address mask register 134 is a register for setting mask information based on a masking instruction signal output from CPU 113. The masking instruction signal is equivalent to a write signal (write data, write enable, or the like) used for CPU 113 to write data in a general register. Address mask register 134 outputs the set mask information as a REG signal to mask signal generator 133. The REG signal represents 31-bit data.

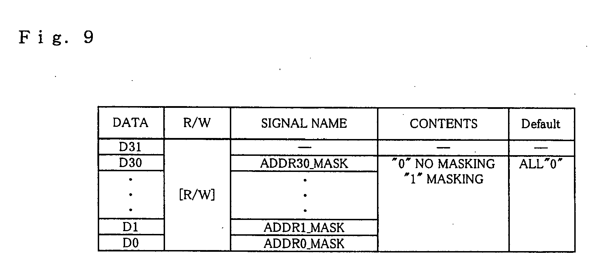

As shown in Fig. 9, address mask register 134 shown in Fig. 8 is a 32-bit register and uses 31 out of 32 bits. The 31 bits are associated with respective reception addresses. If a bit is set to "0", then it represents "no masking set", and if a bit is set to "1", then it represents "masking set". According to the default value (initial value), all the 31 bits are set to "0".

Selector 135 selects either one of the value from 5-bit register 130, the value from 5-bit counter 131, and "1F" based on a SEL signal output from timing controller 132 and an ADDRMSK signal output from mask signal generator 123. Selector 135 transmits the selected value as a reception address to ATM switch 104. "1F" is used as an address which does not correspond to any of the ports of the UTOPIA interface.

While selector 135 is selecting the value from 5-bit register 130, mask controller 136 shuts down 5-bit counter 131 as is the case with the processing operation in time slot T904 shown in Fig. 2.

Timing controller 132 controls the timing of operation of the above components of reception address generator 112.

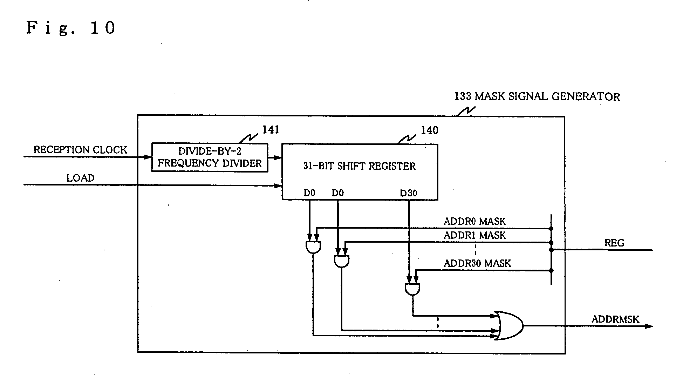

As shown in Fig. 10, mask signal generator 133 comprises 31-bit shift register 140 and divide-by-2 frequency divider 141.

Divide-by-2 frequency divider 141 is a circuit for frequency-dividing the reception clock signal by 2.

31-bit shift register 140 generates 31 pulses in one cyclic period using the frequency-divided clock signal from divide-by-2 frequency divider 141. The generated 31 pulses from 31-bit shift register 140 and the REG signal output from address mask register 134 are ANDed by AND gates. The output signals from the AND gates are ORed by a 31-input OR gate, which outputs its output signal as the ADDRMSK signal to selector 135.

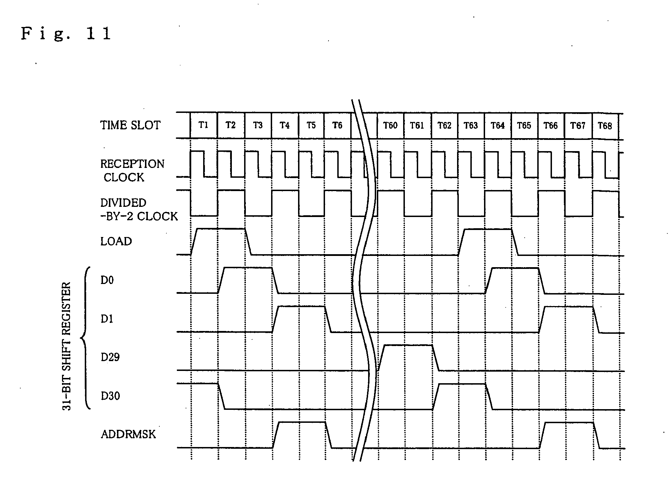

The timing to generate the ADDRMSK signal in mask signal generator 133 shown in Fig. 10 will be described below with reference to Fig. 11. In Fig. 11, time slot numbers are assigned to respective timing slots for the purpose of illustrating the transmission timing for respective signals.

When a LOAD signal output from timing controller 132 is applied to mask signal generator 133 in time slot T1, 31-bit shift register 140 generates 31 pulses (D0 through D30) in one cyclic period in respective time slots T2 through T63.

Pulses D0 through D30 and the REG signal are ANDed. For example, the register corresponding to pulse D1 of the REG signal is masked. In this case, the ADDRMSK signal is set to "1" at the timing of time slot T4 and time slot T5 which is the same as the timing of pulse D1, and output to selector 135.

When reception address generator 112 outputs reception address "00", the LOAD signal is asserted by timing controller 132. When the LOAD signal is asserted, 5-bit counter 131 is reset to "00" and 31-bit shift register 140 is loaded with D0 = "1". Thereafter, the bit positions for outputting "1" are operated synchronously from the value of 5-bit counter 131 and 31-bit shift register 140.

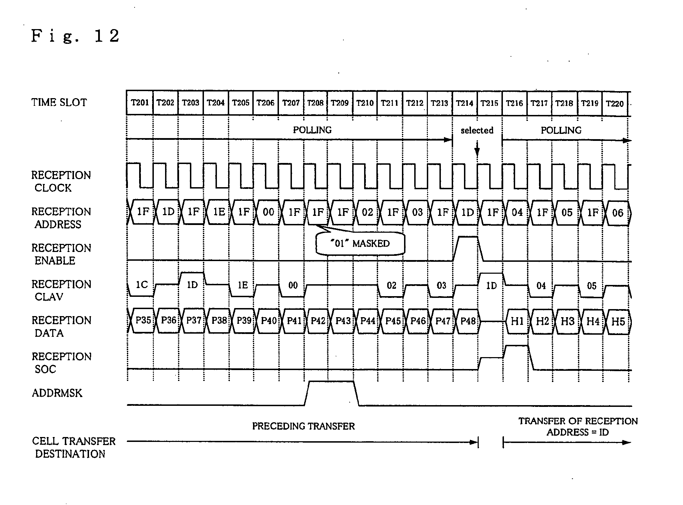

Operation of the ATM cell communication system according to the present invention will be described below with reference to a timing chart shown in Fig. 12.

It is assumed that a transmission CLAV signal transmitted from a PHY layer device which has a transmission address associated with reception address "01" does not represent a receivable state, i.e., a transmission CLAV signal transmitted from a PHY layer device which has a transmission address associated with another reception address represents a receivable state, and ATM cell data having reception address "1D" can be transmitted.

First, the timing to transmit ATM cell data having reception address "1D" will be described below. 5-bit counter 131 of reception address generator 112 generates reception addresses. When reception address "1D" is transmitted from selector 135 to ATM switch 140 in time slot T202, reception CLAV supervisor 110 receives a reception CLAV signal where the timing corresponding to reception address "1D" is set to "1 (valid)" in time slot T203.

Reception address "1D" is judged as having a transmission request for ATM cell data, and timing controller 132 holds "1D" representing the present value of 5-bit counter 131 in 5-bit register 130.

At this time, since the preceding ATM cell data are transferred, the ATM cell data having reception address "1D" are not transferred. While the preceding ATM cell data are being transferred, the values of 5-bit counter 131 are transmitted as reception addresses in time slots T204 through T212.

Thereafter, at the time the transfer of the preceding ATM cell data is finished, "1D" held by 5-bit register 130 is selected by selector 135 in time slot T214 and transmitted as a reception address to ATM switch 104. At this time, the reception enable signal from receiver 111 is set to "1 (valid)" and transmitted.

Receiver 111 receives ATM cell data with a reception SOC signal at the start as reception data from ATM switch 104, and starts transferring ATM cell data having reception address "1D" from time slot T216. At this time, the value of 5-bit counter 131 is selected as a reception address by selector 135, and transmitted to ATM switch 104. In other words, polling is performed except for indicating reception addresses to which ATM cell data are to be transferred.

The timing to mask reception address "01" will be described below.

As described above with respect to time slot T4 and time slot T5 shown in Fig. 11, an ADDRMSK signal as a mask signal for a reception address with "masking set" by address mask register 134 is output in synchronism with the timing to output the value of the reception address with 5-bit counter 131. The ADDRMSK signal which is set to "1 (valid)" is output in time slot T208 which is the timing to output reception address "01". Therefore, selector 135 selects "1F", and the reception address transmitted to ATM switch 104 is "1F". Accordingly, in time slot T209, ATM switch 104 does not recognize reception address "01", and a reception CLAV signal corresponding to reception address "01" is not received.

According to a process of setting reception addresses to be masked, if the settings shown in Fig. 6 are stored in address table 118, for example, then reception addresses "1", "15", "20", "25" associated with transmission address "0" are masked providing a transmission CLAV signal that can be transmitted from a PHY layer device having transmission address "0" is not received.

Rather than masking reception addresses, the reception CLAV signal may be masked.

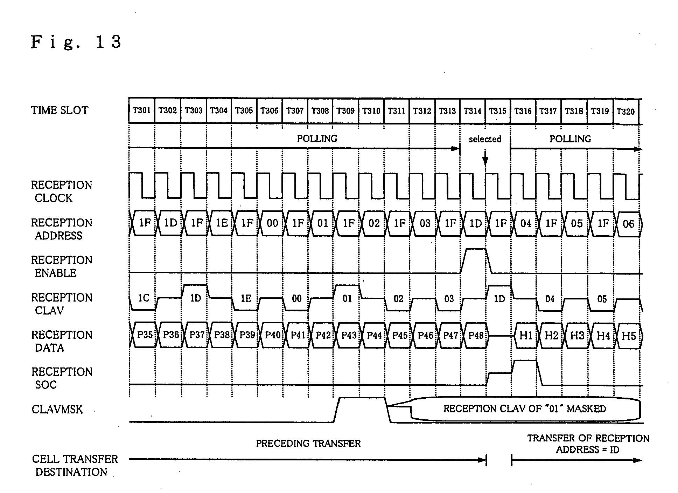

A process of masking the reception CLAV signal according to the present invention will be described below with reference to Fig. 13. As described above with reference to Fig. 12, it is assumed that a transmission CLAV signal transmitted from a PHY layer device which has a transmission address associated with reception address "01" does not represent a receivable state, i.e., a transmission CLAV signal transmitted from a PHY layer device which has a transmission address associated with another reception address represents a receivable state, and ATM cell data having reception address "1D" can be transmitted.

The timing to transmit ATM cell data having reception address "1D" is the same as the timing described above with reference to Fig. 12, and will not be described below.

The timing to mask a reception CLAV signal having reception address "01" will be described below.

Reception CLAV supervisor 110 receives a reception CLAV signal corresponding to reception address "01" in time slot T309. Since reception address "01" is an address which cannot be transmitted, a CLAVMSK signal which is a mask signal for the reception CLAV signal wherein the timing of reception address "01" is "1 (valid)" is generated in time slot T309. A reception enable signal based on the reception CLAV signal which is masked by the CLAVMSK signal is transmitted from receiver 111 to ATM switch 104. In other words, a reception enable signal wherein the timing corresponding to reception address "01" is set to a state that is not an enabled state (a disabled state) by ATM switch 104 is transmitted to ATM switch 104. Therefore, reception data corresponding to reception address "01" are not transmitted from ATM switch 104 in time slot T309.

As described above, if a signal indicating that ATM cell data can be received is not transmitted from PHY layer devices 102-1 through 102-n, i.e., if PHY layer devices 102-1 through 102-n are incapable of receiving ATM cell data, or FIFO memories serving as internal buffers of PHY layer devices 102-1 through 102-n are full, then the corresponding reception addresses in ATM switch 104 are masked. Consequently, as the transmission ATM cell data via ATM layer device 101 to the PHY layer devices whose FIFO memories are full is limited, a data loss due to an overflow of common cell buffer 120 is prevented from occurring.

Only reception addresses used by ATM cell data destined for the PHY layer devices whose FIFO memories are full are masked. Therefore, ATM cell data destined for other PHY layer devices can normally be transmitted.

It has heretofore been necessary to increase the storage capacity of common cell buffer 120 of ATM layer device 101 by the amount of ATM cell data that are accumulated as determined from the input cell burst length and the output PHY layer device bit rate. According to the present invention, since the transmission of ATM cell data from ATM switch 104 is limited when the FIFO memories of PHY layer devices are full, the storage capacity of common cell buffer 120 can be reduced by the amount of ATM cell data that are accumulated.

ATM layer device 101 may search for the second address of a preceding-stage device based on the first address of a subsequent-stage device which is not capable of receiving ATM cell data, set a reception enable signal indicative of whether ATM layer device 101 is capable of receiving ATM cell data or not, to a disabled state at the timing depending on the second address, and transmit the reception enable signal set to the disabled state to the preceding-stage device.

ATM layer device 101 may mask a reception CLAV signal which is a transmission request signal at the timing depending on the second address.

In a method to be carried out by an ATM cell communication system including ATM layer device 101 for processing ATM cell data in an ATM layer, a preceding-stage device connected to a preceding stage of ATM layer device 101 by a UTOPIA level 2 interface, and a plurality of subsequent-stage devices connected to a subsequent stage of ATM layer device 101 by a UTOPIA level 2 interface, wherein ATM cell data are transmitted from the preceding-stage device to ATM layer device 101 and from ATM layer device 101 to the subsequent-stage devices,

ATM layer device 101 may have the step of searching for a second address of the preceding-stage device based on a first address of a subsequent-stage device which is incapable of receiving ATM cell data, and

ATM layer device 101 may have the step of masking the second address when the second address is transmitted to the preceding-stage device.

Alternatively, ATM layer device 101 may have the step of searching for a second address of the preceding-stage device based on a first address of a subsequent-stage device which is incapable of receiving ATM cell data,

ATM layer device 101 may have the step of setting a reception enable signal indicative of whether ATM layer device 101 can receive ATM cell data or not to a disabled stage at the timing depending on the second address, and

ATM layer device 101 may have the step of transmitting the reception enable signal set to the disabled stage to the preceding-stage device.

Alternatively, ATM layer device 101 may have the step of masking a reception CLAV signal which is a transmission request signal at the timing depending on the second address.

While an exemplary embodiment of the present invention has been described in specific terms, such description is for illustrative purpose only, and it is to be understood that changes and variations may be made without departing from the spirit or scope of the following claims.

## Claims

1. An ATM cell communication system comprising:
an ATM layer device for transmitting and receiving ATM cell data and processing ATM cell data in an ATM layer;
a preceding-stage device connected to a preceding stage of said ATM layer device by a UTOPIA level 2 interface; and
a plurality of subsequent-stage devices connected to a subsequent stage of said ATM layer device by a UTOPIA level 2 interface;
wherein said ATM layer device searches for a second address of said preceding-stage device based on a first address of a subsequent-stage device which is incapable of receiving ATM cell data, and masks the second address when the second address is transmitted to the preceding-stage device.

2. An ATM cell communication system comprising:
an ATM layer device for transmitting and receiving ATM cell data and processing ATM cell data in an ATM layer;
a preceding-stage device connected to a preceding stage of said ATM layer device by a UTOPIA level 2 interface; and
a plurality of subsequent-stage devices connected to a subsequent stage of said ATM layer device by a UTOPIA level 2 interface;
wherein said ATM layer device searches for a second address of said preceding-stage device based on a first address of a subsequent-stage device which is incapable of receiving ATM cell data, sets a reception enable signal indicative of whether the ATM layer device can receive ATM cell data or not to a disabled stage at the timing depending on said second address, and transmits the reception enable signal set to the disabled stage to said preceding-stage device.

3. An ATM cell communication system according to claim 2, wherein said ATM layer device masks a reception CLAV signal which is a transmission request signal at the timing depending on the second address.

4. An ATM layer device for transmitting and receiving ATM cell data, searching for a second address of a preceding-stage device connected to a preceding stage thereof by a UTOPIA level 2 interface, based on a first address of a subsequent-stage device which is connected to a subsequent stage thereof by a UTOPIA level 2 interface and which is incapable of receiving the ATM cell data, and masking the second address when the second address is transmitted to the preceding-stage device.

5. An ATM layer device for transmitting and receiving ATM cell data, searching for a second address of a preceding-stage device connected to a preceding stage thereof by a UTOPIA level 2 interface, based on a first address of a subsequent-stage device which is connected to a subsequent stage thereof by a UTOPIA level 2 interface and which is incapable of receiving the ATM cell data, setting a reception enable signal indicative of whether the ATM layer device can receive ATM cell data or not to a disabled stage at the timing depending on said second address, and transmitting the reception enable signal set to the disabled stage to said preceding-stage device.

6. An ATM layer device according to claim 5, for masking a reception CLAV signal which is a transmission request signal at the timing depending on the second address.

7. A method to be carried out by an ATM cell communication system including an ATM layer device for processing ATM cell data in an ATM layer, a preceding-stage device connected to a preceding stage of the ATM layer device by a UTOPIA level 2 interface, and a plurality of subsequent-stage devices connected to a subsequent stage of the ATM layer device by a UTOPIA level 2 interface, wherein ATM cell data are transmitted from the preceding-stage device to the ATM layer device and from the ATM layer device to the subsequent-stage devices, wherein
said ATM layer device has the step of searching for a second address of the preceding-stage device based on a first address of a subsequent-stage device which is incapable of receiving ATM cell data; and
said ATM layer device has the step of masking the second address when the second address is transmitted to the preceding-stage device.

8. A method to be carried out by an ATM cell communication system including an ATM layer device for processing ATM cell data in an ATM layer, a preceding-stage device connected to a preceding stage of the ATM layer device by a UTOPIA level 2 interface, and a plurality of subsequent-stage devices connected to a subsequent stage of the ATM layer device by a UTOPIA level 2 interface, wherein ATM cell data are transmitted from the preceding-stage device to the ATM layer device and from the ATM layer device to the subsequent-stage devices, wherein
said ATM layer device has the step of searching for a second address of the preceding-stage device based on a first address of a subsequent-stage device which is incapable of receiving ATM cell data;
said ATM layer device has the step of setting a reception enable signal indicative of whether said ATM layer device can receive ATM cell data or not to a disabled stage at the timing depending on the second address; and
said ATM layer device has the step of transmitting the reception enable signal set to the disabled stage to the preceding-stage device.

9. A method according to claim 8, wherein said ATM layer device has the step of masking a reception CLAV signal which is a transmission request signal at the timing depending on the second address.
